(19) **Europäisches Patentamt / European Patent Office / Office européen des brevets**

(11) **EP 3 977 158 B1**

(12) **FASCICULE DE BREVET EUROPEEN**

(45) Date de publication et mention
de la délivrance du brevet:
**13.11.2024 Bulletin 2024/46**

(21) Numéro de dépôt: **20733897.1**

(22) Date de dépôt: **29.05.2020**

(51) Classification Internationale des Brevets (IPC):
*G01S 7/481* (2006.01)   *G01S 17/42* (2006.01)
*G01S 17/10* (2020.01)   *G01S 17/58* (2006.01)
*G01S 17/894* (2020.01)   *G02F 1/29* (2006.01)

(52) Classification Coopérative des Brevets (CPC):
**G01S 7/4814; G01S 7/4817; G01S 7/4818;
G01S 17/10; G01S 17/42; G01S 17/58;
G01S 17/894; G02F 1/292**

(86) Numéro de dépôt international:
**PCT/EP2020/065037**

(87) Numéro de publication internationale:
**WO 2020/240003 (03.12.2020 Gazette 2020/49)**

(54) **SYSTEME LIDAR COMPRENANT UN ELEMENT DIFFRACTIF INTERFERENTIEL ET PROCEDE D'IMAGERIE LIDAR**

LIDAR-SYSTEM MIT EINEM INTERFERENZIELLEN DIFFRAKTIVEN ELEMENT UND LIDAR-ABBILDUNGSVERFAHREN

LIDAR SYSTEM COMPRISING AN INTERFERENTIAL DIFFRACTIVE ELEMENT AND LIDAR IMAGING METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.05.2019 FR 1905441**

(43) Date de publication de la demande:
**06.04.2022 Bulletin 2022/14**

(73) Titulaires:
• **THALES
92400 Courbevoie (FR)**
• **Commissariat à l'Energie Atomique et aux
Energies
Alternatives
75015 Paris (FR)**

(72) Inventeurs:
• **DUPORT, François
91767 Palaiseau (FR)**
• **VAN DIJK, Frédéric
91767 Palaiseau (FR)**
• **BOIS, Philippe
91767 Palaiseau (FR)**

(74) Mandataire: **Atout PI Laplace
Immeuble Up On
25 Boulevard Romain Rolland
CS 40072
75685 Paris Cedex 14 (FR)**

(56) Documents cités:
**EP-A1- 3 232 226**    **EP-A1- 3 546 982**
**WO-A1-2018/116412**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Domaine technique :

[L'invention relève du domaine de la détection par LIDAR.

### Technique antérieure :

Les LIDAR utilisent la lumière pour mesurer la distance et éventuellement la vitesse d'objets ou de cibles. A l'instar des radars, les systèmes LIDAR nécessitent de sonder l'espace avec un faisceau optique pour recomposer une image en deux ou trois dimensions de la scène observée. En général, cela consiste à balayer l'espace avec un faisceau optique. Il en résulte un temps de balayage qui peut éventuellement être néfaste pour certaines applications. En effet, pendant que le faisceau est dirigé vers une direction donnée, les autres directions de la scène ne sont pas observées. De plus la zone couverte par le LIDAR et la rapidité de sa couverture dépendent des solutions choisies pour fabriquer le Lidar. Il s'agit d'un compromis entre plusieurs paramètres : la distance couverte par le LIDAR qui dépend de la puissance du laser utilisé, l'angle solide couvert par le LIDAR qui dépend du type d'application (surveillance alertée ou escorte par exemple), et enfin la rapidité avec laquelle le lidar sonde la zone couverte (qui dépend en général du type et de la vitesse des cibles recherchées).

Dans le cadre des systèmes LIDAR, le balayage de l'espace par un faisceau optique est souvent un paramètre limitant. Pour réaliser ce balayage trois solutions existent :

La première solution est principalement mécanique. Elle consiste à utiliser un couple émetteur laser et récepteur qui pointent tous les deux dans la même direction. L'ensemble est mobile afin de balayer l'espace. Il peut aussi s'agir d'un ou plusieurs miroirs mobiles qui permettent d'orienter le faisceau lumineux de l'émetteur laser et diriger le signal réfléchi sur le photodétecteur. Ces dispositifs de balayage peuvent éventuellement être miniaturisés en utilisant des MEMS optiques. Si cette solution à l'avantage de ne pas dépendre de la longueur d'onde utilisée pour le Lidar, elle nécessite cependant un alignement précis du système optique, et présente une grande sensibilité aux vibrations et aux accélérations ce qui limite fortement les applications envisageables.

La deuxième solution consiste à utiliser un système optique interférentiel pour défléchir le faisceau optique. Le principe est alors d'utiliser un montage optique interférentiel pour diriger la lumière dans une direction de l'espace donnée en fonction de la longueur d'onde. De manière générale, il s'agit de séparer le signal optique en plusieurs points et d'imposer un déphasage entre ces points. Les interférences entre les signaux provenant de ces points sont constructives dans une direction donnée. En variant le déphasage entre ces points, soit par l'utilisation de modulateurs de phase, soit en variant la longueur d'onde du laser utilisé, le système balaie la direction pointée par le faisceau optique. Cette solution à l'avantage de ne reposer sur aucune pièce mobile mais impose certaines contraintes sur la rapidité d'accord du laser et sa reproductibilité. De plus il n'est pas possible d'obtenir un balayage angulaire important sur deux axes, ce qui impose d'utiliser plusieurs systèmes interférentiels et de commuter leur utilisation pour obtenir le balayage désiré. Ces méthodes sont connues de l'homme du métier (voir US2018/052378 et DE102015225863).

La troisième solution consiste à utiliser une barrette de photodiodes. Chaque photodiode est en charge de détecter le signal optique provenant d'une direction donnée de la scène observée. Cette solution ne permet d'observer qu'un axe de la scène, soit une ligne, soit une colonne de l'image à réaliser. Par ailleurs, les solutions basées sur une matrice de photodétecteurs ne permettent pas de mesurer les vitesses des objets.

Il est aussi connu d'utiliser une combinaison de ces solutions. Par exemple les systèmes de US 2017/0269215A1 et WO2017/132704A1 utilisent des barrettes de photodétecteur montées sur une tourelle mobile.

Autres systèmes LIDAR sont divulgué dans EP 3 232 226 A1 et WO 2018/116412 A1.

Cependant, l'ensemble des solutions existantes de balayage de faisceau sont soit potentiellement sensibles aux vibrations pour les solutions mécaniques, soit proposent des angles de balayage assez inhomogènes. De plus toutes ces solutions, de par la nature même du balayage, ne permettent d'observer chaque direction de l'espace que par intermittence. Il y a donc un compromis à trouver fonction de la précision du balayage, de sa rapidité et de ses amplitudes.

L'invention vise à pallier certains des problèmes et des contraintes liés au balayage angulaire du faisceau laser dans un système LIDAR.

A cet effet, l'invention a pour objet un système tel que décrit par les revendications.

L'invention a également pour objet un procédé d'utilisation d'un tel système.

### Résumé de l'invention :

A cet effet, un objet de l'invention est un système LIDAR comprenant au moins une source laser et un système de détection optique pour détecter un rayonnement émis par la source laser et réfléchi par une scène à observer, caractérisé en ce que :

- la source laser est adaptée pour émettre simultanément à $n>1$ longueurs d'ondes distinctes $\lambda_i$, $i \in [1,n]$ ;
- le système LIDAR comprend également un composant optique diffractifconfiguré pour diriger le rayonnement émis par la source laser vers la scène à observer suivant une direction différente pour chaque dite longueur d'onde de manière simultanée, lesdites directions étant situées dans un même plan xz; et

- le système de détection optique comprend au moins une photodiode agencée de manière à être illuminée par le rayonnement réfléchi par la scène à observer, ainsi qu'un système optique configuré pour diriger sur la ou les photodiodes un rayonnement laser émis par ladite ou une autre source laser et présentant une longueur d'onde $\lambda_0$ différente desdites n longueurs d'onde $\lambda_i$, de telle sorte que la ou les photodiodes génèrent un signal comprenant les battements des longueurs d'ondes du rayonnement réfléchi par la scène à observer avec le rayonnement à la longueur d'onde $\lambda_0$

Selon des modes particuliers de l'invention :

- le système de détection optique comprend une pluralité de photodiodes agencées selon un axe y non parallèle au plan xz et une lentille convergente adaptée pour associer à chacune des photodiodes les rayons lumineux provenant de la scène à observer et qui forment avec l'axe y un angle compris dans une plage déterminée, différente pour chaque photodiode;

- le composant optique diffractif est un circuit optique intégré comprenant des guides d'onde débouchant sur des faces de sortie du circuit optique intégré et des lentilles divergentes aux faces de sortie;

- le système laser est adapté pour émettre à la longueur d'onde $\lambda_0$, ledit système LIDAR comprenant un filtre interférentiel adapté pour sélectionner et séparer spatialement un rayonnement à la longueur d'onde $\lambda_0$ du rayonnement laser émis par le système laser;

- le système LIDAR comprend un composant optique configuré pour décaler en longueur d'onde une composante spectrale du rayonnement du laser pour obtenir $\lambda_0$ ;

- le système laser est un laser à blocage de mode impulsionnel ;

- le système laser est un laser à onde continue avec une relation de phase fixe entre les n longueurs d'onde générées par le système laser, comprenant en outre des moyens adaptés pour effectuer une modulation en fréquence des n longueurs d'ondes distinctes, ladite modulation étant inférieure à 1GHz, préférentiellement inférieure à 100MHz, préférentiellement inférieure à 10MHz;

- le système LIDAR comprend des moyens de traitements du ou des signaux générés par la ou les photodiodes, adaptés pour déterminer au moins un paramètre parmi la vitesse radiale, la distance et la position d'au moins un objet réfléchissant présent dans la scène à observer;

- la ou les photodiodes possèdent une bande spectrale supérieure à 8GHz préférentiellement, 10GHz et encore préférentiellement 12 GHz;

Un autre objet de l'invention est un procédé d'utilisation d'un système LIDAR comprenant un système laser, un composant optique diffractif et un système de détection optique comprenant au moins une photodiode agencée de manière à être illuminée par le rayonnement réfléchi par la scène à observer, ledit procédé comprenant les étapes suivantes :

a. l'émission simultanée d'un rayonnement à au moins n>1 longueurs d'ondes distinctes $\lambda_i$, $i \in [1,n]$ par le système laser ;
b. la diffraction par l'élément diffractif du rayonnement émis par la source laser vers la scène à observer suivant une direction différente pour chaque dite longueur d'onde de manière simultanée, lesdites directions étant situées dans un même plan xz
c. l'illumination, à l'aide d'un système optique du système de détection optique, de la ou des photodiodes par un rayonnement laser émis par ladite ou une autre source laser et présentant une longueur d'onde $\lambda_0$ différente desdites n longueurs d'onde $\lambda_i$;
d. et la génération par la ou les photodiodes d'un signal comprenant les battements des longueurs d'ondes du rayonnement réfléchi par la scène à observer avec le rayonnement à la longueur d'onde $\lambda_0$

la génération par la ou les photodiodes d'un signal comprenant les battements

Selon un mode particulier, ce procédé d'utilisation une étape finale de détermination de la vitesse radiale et la position d'au moins un objet réfléchissant présents dans la scène à observer par des moyens de traitements du ou des signaux générés par la ou les photodiodes.

## Brève description des figures :

D'autres caractéristiques, détails et avantages de l'invention ressortiront à la lecture de la description faite en référence aux dessins annexés donnés à titre d'exemple et qui représentent, respectivement :

[Fig. 1] une vue schématique du système LIDAR de l'invention selon un premier mode de réalisation de l'invention.

[Fig 2A], [Fig 2B] et [Fig 2C], des vues schématiques en deux dimensions de face, de côté et de dessus respectivement du système LIDAR du premier mode de réalisation de l'invention.

[Fig. 3], un schéma du fonctionnement d'un composant optique diffractif du système LIDAR du premier mode de réalisation de l'invention.

[Fig. 3B], le profil du champ électromagnétique au sein de la cavité THz électromagnétique à modes de Tamm selon le deuxième mode de réalisation de l'invention.

[Fig. 4] un schéma du fonctionnement du système de détection optique du système LIDAR du premier mode de réalisation de l'invention.

**Description détaillée** :

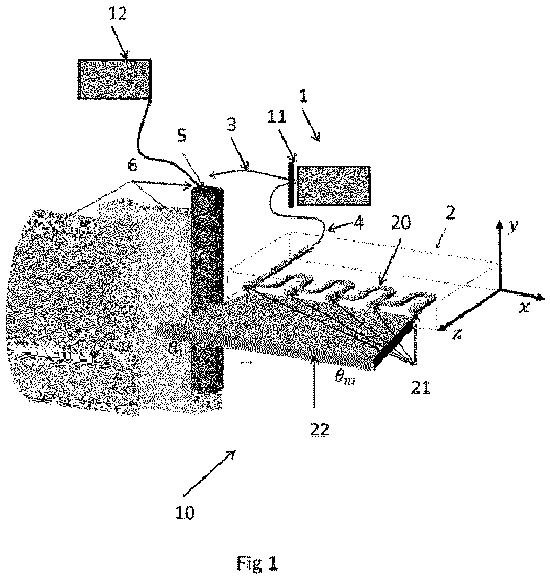

La figure 1 illustre un premier mode de réalisation de l'invention. Dans ce mode de réalisation, le système LIDAR 10 comprend un système laser 1 à blocage de modes impulsionnel. Ce système laser 1 émet un rayonnement comprenant n>1 longueurs d'onde, par exemple treize longueurs d'ondes $\lambda_{i0}$, $i \in [0,12]$ distinctes, correspondant à 13 modes, la longueur d'onde du premier mode (n = 0) étant comprise entre 1 et $2\mu m$. L'intervalle spectral libre du laser étant de $f_0 = 1GHz$, les modes sont espacés *de 1GHz. Dans* le mode de réalisation de la figure 1, le système laser 1 comprend un filtre interférentiel ou un système de filtrage adapté 11 pour sélectionner et séparer spatialement du rayonnement émis par le système laser un rayonnement à la longueur d'onde $\lambda_0$. Dans ce mode de réalisation, le filtre interférentiel 11 est un filtre de Bragg. Ce filtrage permet donc d'obtenir un faisceau laser 3 comprenant un seul mode à une longueur d'onde $\lambda = \lambda_0$ et un autre faisceau laser 4 comprenant 12 modes et 12 longueurs d'ondes distinctes $\lambda_i$, $i \in [1,n]$, toutes supérieures à $\lambda_0$.

Dans un autre mode de réalisation, le système laser émet un rayonnement comprenant n>1 longueurs d'onde $\lambda_i$, $i \in [1,n]$ et le rayonnement laser 3 de longueur d'onde $\lambda_0$ est émis par un laser différent du système laser 1, $\lambda_0$ étant strictement inférieure ou supérieure aux longueurs d'onde $\lambda_i$, $i \in [1,n]$ émises par le système laser et comprises dans le faisceau 4. Dans un autre mode de réalisation, le système laser comprend un composant optique configuré pour décaler en longueur d'onde un mode laser $\lambda_i$ $i \in [1,n]$ émis par le système laser pour obtenir le faisceau 3 à une longueur d'onde $\lambda = \lambda_0$, $\lambda_0$ étant strictement inférieure (ou supérieure) aux longueurs d'onde $\lambda_i$, $i \in [1,n]$ émises par le système laser et comprises dans le faisceau 4. Dans encore un autre mode de réalisation de l'invention $\lambda_0$ est simplement différent des longueurs d'ondes $\lambda_i$, $i \in [1,n]$.

Le système LIDAR 10 comprend un composant optique diffractif 2 configuré pour diriger le rayonnement 4 émis par la source laser vers la scène à observer suivant une direction différente pour chaque dite longueur d'onde de manière simultanée, lesdites directions étant situées dans un même plan xz. Dans une exemple donné à titre non limitatif, l'élément optique diffractif est un circuit optique intégré comprenant des guides d'onde 20 avec un indice effectif de 1.5 débouchant sur des faces de sortie du circuit optique intégré et des lentilles divergentes 21 aux faces de sorties. Les sorties sont alignées et espacées de $15\mu m$ selon l'axe x et chaque sortie possède un retard optique de 2cm par rapport à la sortie précédente. Le rayonnement 4 en sortie du système laser 1 est guidé par une fibre optique jusqu'au circuit optique intégré. Grâce à l'interférence entre les faisceaux obtenus en sortie du composant optique diffractif 2, chaque longueur d'onde $\lambda_i$ émise par le système laser est rayonnée simultanément dans une direction $d_i$ différente du plan xz de manière à couvrir un angle d'environ 90°. Dans le mode de réalisation de la figure 1, chaque longueur d'onde $\lambda_{(i+1)}$ ie[1,11] est donc rayonnée dans une direction du plan xz faisant un angle de 7.5° par rapport à la direction dans laquelle est rayonnée la longueur d'onde $\lambda_i$. Le rayonnement laser 22 obtenu permet donc d'échantillonner l'espace de la scène observée grâce à la séparation spatiale des longueurs d'onde. Dans un autre mode de réalisation, le composant optique diffractif est un réseau de diffraction en réflexion ou transmission d'amplitude ou de phase.

Le système LIDAR comprend de plus un système de détection optique 6 comprenant au moins un photodétecteur. Dans le mode de réalisation de la figure 1, le système de détection comprend une pluralité m de photodiodes 5 agencées selon un axe y non parallèle et de préférence perpendiculaire au plan xz et au moins une lentille convergente adaptée pour associer à chacune des photodiodes $j \in [1,m]$ les rayons lumineux provenant de la réflexion du rayonnement 22 par un ou plusieurs objets de la scène à observer et qui forment avec l'axe y un angle $\phi_j$, $j \in [1,m]$ compris dans une plage déterminée, différente pour chaque photodiode. Dans le mode de réalisation de la figure 1, l'axe y est perpendiculaire à x et z. Ainsi, dans le mode de réalisation de la figure 1, chaque photodiode reçoit un rayonnement provenant d'objets de la scène à observer correspondant à des élévations (positions selon l'axe y) différentes.

Le système de détection optique 6 comprend par ailleurs un système optique 7 (non représenté dans la figure 1) configuré pour diriger sur la ou les photodétecteurs le rayonnement laser 3 possédant une longueur d'onde $\lambda_0$ différente desdites n>1 longueurs d'onde $\lambda_i$ du rayonnement 4. Ce système optique peut être par exemple une fibre optique dans laquelle le rayonnement 3 traversant le filtre interférentiel 11 est injecté, et qui transporte ce rayonnement jusqu'à la ou les photodiodes. Dans un autre mode de réalisation ce système optique 7 est un guide d'onde planaire. Dans un mode de réalisation le système optique est un système de miroirs. Ce mode de réalisation est moins avantageux car le système de miroirs est plus sensible aux vibrations. Ainsi, la ou les photodiodes génèrent un signal comprenant les battements des longueurs d'ondes du rayonnement réfléchi par la scène à observer avec le rayonnement à la longueur d'onde $\lambda_0$. L'effet de ces battements étant que, pour chaque longueur d'onde - et donc pour chaque direction du plan xz - le signal de la photodiode est modulé à une fréquence différente, dans la plage GHz.

Dans le mode de réalisation de la figure 1, des moyens de traitement 12 des signaux générés par les photodiodes sont adaptés pour déterminer au moins un paramètre parmi la vitesse radiale et la position d'objets réfléchissants présents dans la scène à observer à partir des spectres électriques des rayonnements captés par les photodiodes. La position d'un objet est calculée en déterminant l'élévation de l'objet (déterminée par l'angle $\phi_j$ que l'objet forme avec l'axe y et donc par la photodiode j qui génère le spectre), la direction de l'objet (à quelle fréquence $i \times f_0$ retrouve-t-on une composante spectrale) et la distance (donnée par le temps de vol de l'impulsion laser). La vitesse radiale d'un objet réfléchissant est déterminée par le décalage en fréquence d'une composante du spectre électrique par rapport aux fréquences $i \times f_0$, $i \in [1,n]$.

Dans le mode de réalisation de la figure 1, supposons qu'un objet à détecter réfléchit les rayons du faisceau 22 qui sont émis dans la direction $d_i$ correspondant à la longueur d'onde $\lambda_i$ et que cette réflexion donne des rayons lumineux faisant un angle $\phi=\phi_j$ avec l'axe y. Le système de détection optique permet de capter ces rayons lumineux sur la photodiode j qui va alors générer un signal comprenant les battements des longueurs d'ondes du rayonnement réfléchi avec le rayonnement 3 à la longueur d'onde $\lambda_0$. A partir de ce signal, les moyens de traitement sont configurés pour obtenir le spectre électrique du rayonnement capté par la photodiode. Le spectre électrique comportera alors une composante spectrale à la fréquence $i \times f_0$. La vitesse de cet objet est déterminée par le décalage en fréquence lié à l'effet Doppler.

En analysant, pour toutes les photodiodes $j \in [1,m]$ le spectre situé autour des fréquences $i \times f_0$, $i \in [1,n]$ il est possible de reconstituer la scène observée en une seule mesure. A l'inverse des systèmes LIDAR utilisant des dispositifs interférentiels connus de l'art antérieur, le mode de réalisation de la figure 1 permet donc d'observer simultanément plusieurs directions d'une scène et donc de s'affranchir des contraintes et désavantages liés au balayage du faisceau laser. De plus, le système LIDAR du mode de réalisation de la figure 1 ne présente aucune pièce mobile ce qui rend les mesures de vitesse radiale et de position robustes aux vibrations et aux fortes accélérations.

Dans le mode de réalisation de la figure 1 les photodiodes possèdent une bande spectrale de détection d'au moins 13 GHz, ce qui permet de détecter simultanément sur chaque photodiode les douze composantes fréquentielles à $n \times f_0$, $n \in [1,12]$ espacées de 1GHz, ces composantes correspondant aux battements du rayonnement à la longueur d'onde $\lambda_0$ avec les douze longueurs d'ondes $\lambda_i$ rayonnées dans des directions $d_i$ différentes et réfléchies par d'éventuels objets.

La résolution en vitesse radiale est fixée par l'espacement en fréquence entre deux composantes fréquentielles, c'est-à-dire par l'intervalle spectral libre $f_0$. Aussi, le décalage maximal en fréquence lié à l'effet Doppler mesurable est

[Math 1]

$$\Delta f_{max} = \frac{f_0}{2}$$

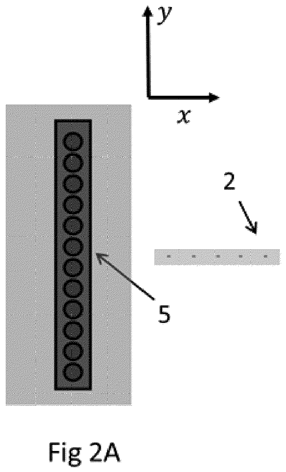

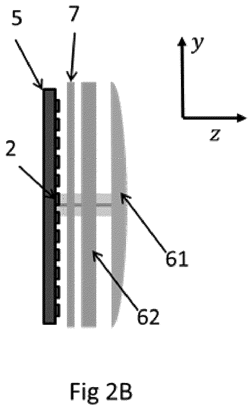

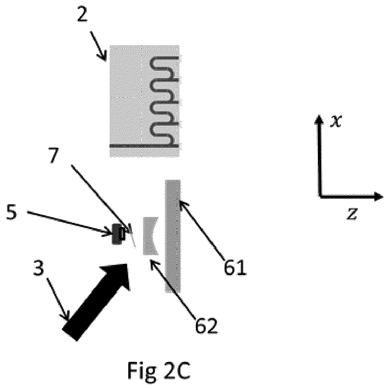

La figure 2 illustre une vue schématique en deux dimensions de face, de côté et de dessus du système LIDAR de la figure 1. Comme précisé précédemment, les photodiodes 5 du système optique de détection sont alignés selon un axe y, perpendiculaire à l'axe x qui est l'axe selon lequel les sorties du composant optique diffractif 2 sont alignées. Dans ce mode de réalisation, le système optique de détection comporte par ailleurs une lentille cylindrique divergente 62 permettant de capter un maximum de flux sur les photodiodes. Le système optique 7 permettant de diriger sur la photodiode le rayonnement laser 3 à la longueur d'onde $\lambda_0$ est un miroir réfléchissant à cette longueur d'onde.

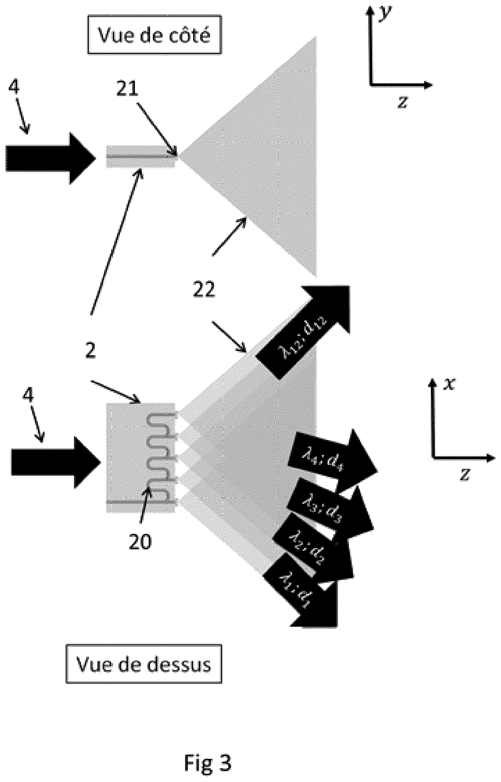

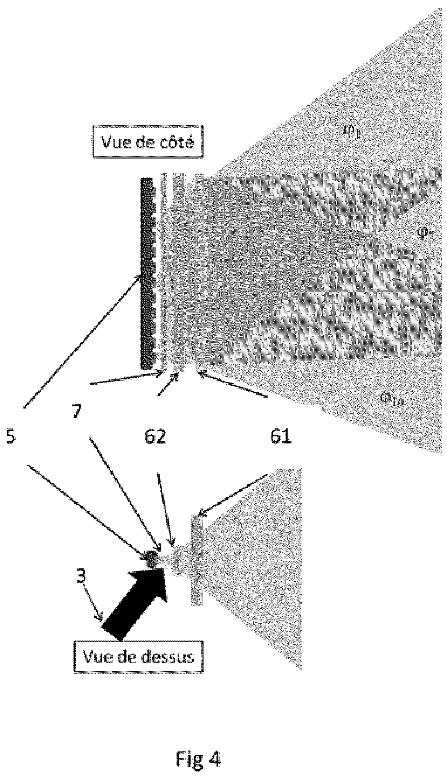

La figure 3 présente un schéma du fonctionnement du composant optique diffractif (ici un circuit optique intégré) 2 du système LIDAR selon le mode de réalisation de la figure 1. Dans la figure 4, une vue de côté et une vue de dessus du composant optique diffractif 2 sont représentées. Dans le circuit optique intégré 2, les guides d'onde 20 débouchent sur des faces de sortie avec des lentilles divergentes 21. Les sorties sont alignées et espacées de $15\mu m$ selon l'axe x et chaque sortie possède un retard optique de 2cm par rapport à la sortie précédente. La vue du dessus permet d'observer que le faisceau laser 4 comprenant douze longueurs d'ondes $\lambda_i$, $i \in [1,12]$ est diffracté en sortie du circuit optique intégré de manière à obtenir un rayonnement 22 dans lequel chaque longueur d'onde $\lambda_i$ est rayonnée simultanément dans une direction $d_i, i \in [1,12]$ différente du plan xz.

Dans le mode de réalisation où le système laser 1 émet un rayonnement comprenant n>1 longueurs d'onde $\lambda_i$, $i \in [1,n]$, le composant optique diffractif est configuré pour diriger le rayonnement 4 émis par la source laser vers la scène à observer suivant une direction différente $d_i, i \in [1,n]$ pour chaque dite longueur d'onde de manière simultanée, lesdites directions étant situées dans un même plan xz.

Enfin, la figure 4 illustre un schéma du fonctionnement du système de détection optique du système LIDAR selon le mode de réalisation de la figure 1. Dans la figure 4, une vue de côté et une vue de dessus sont représentées. La vue de côté permet d'observer que la lentille cylindrique convergente 61 associe à chacune des m photodiodes 5 les rayons lumineux provenant de la réflexion du rayonnement 3 par un ou plusieurs objets de la scène à observer et qui forment avec l'axe y un angle $\phi_j$, $j \in [1,m]$ compris dans une plage déterminée, différente pour chaque photodiode. Dans ce mode de réalisation le système optique de détection comporte douze photodiodes possédant une bande spectrale de détection de 13GHz. Chacune des photodiodes détecte donc des objets à des élévations différentes. La lentille cylindrique divergente 62 permet de couvrir au mieux la scène observée. Le miroir 7 est réfléchissant à la longueur d'onde $\lambda_0$ du rayonnement 3 et permet de diriger sur les photodiodes 5 le rayonnement laser 3 qui génère un signal comprenant les battements des longueurs d'ondes du rayonnement réfléchi par la scène à observer avec le rayonnement 3 à la longueur d'onde $\lambda_0$.

Dans un autre mode de réalisation, le système laser est un laser à onde continue émettant à n>1 longueurs d'onde $\lambda_i$, $i \in [1,n]$ avec une relation de phase fixe entre les n longueurs d'onde générées par le système laser. Dans ce mode de réalisation, le système laser comprenant en outre des moyens adaptés pour effectuer une modulation en fréquence des n longueurs d'ondes distinctes, ladite modulation étant inférieure à 1 GHz, préférentiellement inférieure à 100MHz, préférentiellement inférieure à 10MHz. Pour réaliser cette modulation, plusieurs composants peuvent être utilisés : il peut s'agir d'un modulateur acousto-optique ou bien un double modulateur Mach Zehnder tel que ceux utilisés pour les transmissions optiques cohérentes (aussi appelé modulateur IQ) et qui est polarisé de manière à appliquer un décalage de la fréquence optique. Cette modulation en fréquence permet de déterminer, à l'issue d'une étape finale, la vitesse radiale d'au moins un objet réfléchissant présent dans la scène à observer par effet Doppler.

Dans un autre mode de réalisation, le système de détection optique comprend une seule photodiode. Dans ce mode de réalisation, il est donc possible de détecter des signaux optiques provenant uniquement d'un axe de la scène. Cependant, il reste possible d'observer simultanément plusieurs directions de la scène grâce aux longueurs d'onde $\lambda_i$, $i \in [1,n]$ du rayonnement 4 émises simultanément dans les directions $d_i$ en sortie du composant optique diffractif 2.

**Revendications**

1. Système LIDAR (10) comprenant au moins une source laser (1) et un système de détection optique (6) pour détecter un rayonnement émis par la source laser et réfléchi par une scène à observer, **caractérisé en ce que** :

   - la source laser est adaptée pour émettre simultanément à n>1 longueurs d'ondes distinctes $\lambda_i$, $i \in [1,n]$ ;
   - le système LIDAR comprend également un composant optique diffractif (2) configuré pour diriger le rayonnement (4) émis par la source laser vers la scène à observer suivant une direction différente pour chaque dite longueur d'onde de manière simultanée, lesdites directions étant situées dans un même plan xz; et
   - le système de détection optique comprend au moins une photodiode (5) agencée de manière à être illuminée par le rayonnement réfléchi par la scène à observer, **caractérisé en ce que** le système de détection optique comprend aussi un système optique (7) configuré pour diriger sur la ou les photodiodes un rayonnement laser (3) émis par ladite ou une autre source laser et présentant une longueur d'onde $\lambda_0$ différente desdites n longueurs d'onde $\lambda_i$, de telle sorte que la ou les photodiodes génèrent un signal comprenant les battements des longueurs d'ondes du rayonnement réfléchi par la scène à observer avec le rayonnement à la longueur d'onde $\lambda_0$.

2. Système LIDAR selon la revendication précédente, dans lequel le système de détection optique comprend une pluralité de photodiodes (5) agencées selon un axe y non parallèle au plan xz et une lentille convergente (61) adaptée pour associer à chacune des photodiodes les rayons lumineux provenant de la scène à observer et qui forment avec l'axe y un angle compris dans une plage déterminée, différente pour chaque photodiode.

3. Système LIDAR selon l'une quelconque des revendications précédentes, dans lequel le composant optique diffractif est un circuit optique intégré comprenant des guides d'onde (20) débouchant sur des faces de sortie du circuit optique intégré et des lentilles divergentes (21) aux faces de sortie.

4. Système LIDAR selon l'une quelconque des revendications précédentes, dans lequel le système laser est adapté pour émettre à la longueur d'onde $\lambda_0$, ledit système LIDAR comprenant un filtre interférentiel (11) adapté pour sélectionner et séparer spatialement un rayonnement à la longueur d'onde $\lambda_0$ du rayonnement laser émis par le système laser.

5. Système LIDAR selon l'une quelconque des revendications précédentes, comprenant un composant optique configuré pour décaler en longueur d'onde une composante spectrale du rayonnement du laser pour obtenir $\lambda_0$.

6. Système LIDAR selon l'une quelconque des revendications précédentes, dans lequel le système laser est un laser à blocage de mode impulsionnel.

7. Système LIDAR selon l'une quelconque des revendications 1 à 6, dans lequel le système laser est un laser à onde continue avec une relation de phase fixe entre les n longueurs d'onde générées par le système laser, comprenant en outre des moyens adaptés pour effectuer une modulation en fréquence des n longueurs d'ondes distinctes, ladite modulation étant inférieure à 1GHz, préférentiellement inférieure à 100MHz, préférentiellement inférieure à 10MHz.

8. Système LIDAR selon l'une quelconque des revendications précédentes, comprenant des moyens de traitements (12) du ou des signaux générés par la ou les photodiodes, adaptés pour déterminer au moins un paramètre parmi la vitesse radiale, la distance et la position d'au moins un objet réfléchissant présent dans la scène à observer.

9. Système LIDAR selon l'une quelconque des revendications précédentes, dans lequel la ou les photodiodes possèdent une bande spectrale supérieure à 8GHz préférentiellement, 10GHz et encore préférentiellement 12 GHz.

10. Procédé d'utilisation d'un système LIDAR (10) comprenant un système laser (1), un composant optique diffractif (2) et un système de détection optique (6) comprenant au moins une photodiode (5) agencée de manière à être illuminée par le rayonnement réfléchi par la scène à observer, ledit procédé comprenant les étapes suivantes :

a. l'émission simultanée d'un rayonnement à au moins n>1 longueurs d'ondes distinctes $\lambda_i$, $i \in [1,n]$ par le système laser ;
b. la diffraction par l'élément diffractif du rayonnement émis par la source laser vers la scène à observer suivant une direction différente pour chaque dite longueur d'onde de manière simultanée, lesdites directions étant situées dans un même plan xz

**caractérisé en ce que** ledit procédé comprend aussi les étapes suivantes :

c. l'illumination, à l'aide d'un système optique (7) du système de détection optique, de la ou des photodiodes par un rayonnement laser émis par ladite ou une autre source laser et présentant une longueur d'onde $\lambda_0$ différente desdites n longueurs d'onde $\lambda_i$; et
d. la génération par la ou les photodiodes d'un signal comprenant les battements des longueurs d'ondes du rayonnement réfléchi par la scène à observer avec le rayonnement à la longueur d'onde $\lambda_0$.

11. Procédé d'imagerie par un système LIDAR selon la revendication précédente, comprenant une étape finale de détermination de la vitesse radiale et la position d'au moins un objet réfléchissant présents dans la scène à observer par des moyens de traitements (12) du ou des signaux générés par la ou les photodiodes.

**Patentansprüche**

1. LIDAR-System (10), umfassend mindestens eine Laserquelle (1) und ein optisches Erkennungssystem (6) zum Erkennen einer von der Laserquelle ausgestrahlten und durch eine zu betrachtende Szene reflektierten Strahlung, **dadurch gekennzeichnet, dass**:

- die Laserquelle dazu geeignet ist, gleichzeitig bei n > 1 separate Wellenlängen $\lambda_i$, $i \in [1,n]$ auszustrahlen;
- das LIDAR-System auch eine optische Beugungskomponente (2) umfasst, die dafür konfiguriert ist, die von der Laserquelle auf die zu betrachtende Szene ausgestrahlte Strahlung (4) für jede Wellenlänge gleichzeitig einer unterschiedlichen Richtung folgend zu lenken, wobei sich die Richtungen in einer gleichen Ebene xz befinden, und
- das optische Erkennungssystem mindestens eine Photodiode (5) umfasst, die so angeordnet ist, dass sie von der von der zu betrachtenden Szene reflektierten Strahlung beleuchtet wird, **dadurch gekennzeichnet, dass** das optische Erkennungssystem ebenso ein optisches System (7) umfasst, das dafür konfiguriert ist, eine von der oder einer anderen Laserquelle ausgestrahlte Laserstrahlung (3) auf die Photodiode oder Photodioden zu lenken, und eine unterschiedliche Wellenlänge $\lambda_0$ als die n Wellenlängen $\lambda_i$ aufweist, so dass die Photodiode oder Photodioden ein Signal erzeugen, das die Schwebungen der Wellenlängen der von der zu betrachtenden Szene reflektierten Strahlung mit der Strahlung der Wellenlänge $\lambda_0$ umfasst.

2. LIDAR-System nach dem vorhergehenden Anspruch, wobei das optische Erkennungssystem eine Vielzahl von Photodioden (5), die entlang einer nicht zur Ebene xz parallelen Achse y angeordnet sind, und eine Sammellinse (61) umfasst, die dazu angepasst ist, jeder der Photodioden die Lichtstrahlen zuzuordnen, die von der zu betrachtenden Szene kommen und die mit der Achse y einen Winkel bilden, der in einem vorbestimmten Bereich enthalten ist, der bei jeder Photodiode unterschiedlich ist.

3. LIDAR-System nach einem der vorhergehenden Ansprüche, wobei die optische Beugungskomponente eine optische integrierte Schaltung ist, die Wellenleiter (20) umfasst, die zu Ausgangsseiten der optischen integrierten Schaltung und Zerstreuungslinsen (21) an den Ausgangsseiten führen.

**4.** LIDAR-System nach einem der vorhergehenden Ansprüche, wobei das Lasersystem dazu angepasst ist, mit der Wellenlänge $\lambda_0$ auszustrahlen, wobei das LIDAR-System ein Interferenzfilter (11) umfasst, das dazu angepasst ist, eine Strahlung mit der Wellenlänge $\lambda_0$ der von dem Lasersystem ausgestrahlten Laserstrahlung auszuwählen und räumlich abzutrennen.

**5.** LIDAR-System nach einem der vorhergehenden Ansprüche, umfassend eine optische Komponente, die dafür konfiguriert ist, eine Spektralkomponente der Strahlung des Lasers in ihrer Wellenlänge zu verschieben, um $\lambda_0$ zu erhalten.

**6.** LIDAR-System nach einem der vorhergehenden Ansprüche, wobei das Lasersystem ein modengekoppelter Pulslaser ist.

**7.** LIDAR-System nach einem der Ansprüche 1 bis 6, wobei das Lasersystem ein Laser mit kontinuierlicher Welle ist mit einer festen Phasenbeziehung zwischen den von dem Lasersystem erzeugten n Wellenlängen, ferner umfassend Mittel, die dazu angepasst sind, eine Frequenzmodulation der n separaten Wellenlängen durchzuführen, wobei die Modulation weniger als 1 GHz, vorzugsweise weniger als 100 MHz, vorzugsweise weniger als 10 MHz beträgt.

**8.** LIDAR-System nach einem der vorhergehenden Ansprüche, umfassend Verarbeitungsmittel (12) des oder der von der oder den Photodioden erzeugten Signale, die dazu angepasst sind, mindestens einen Parameter unter der radialen Geschwindigkeit, dem Abstand und der Position von mindestens einem reflektierenden Objekt, das in der zu betrachtenden Szene vorliegt, zu bestimmen.

**9.** LIDAR-System nach einem der vorhergehenden Ansprüche, wobei die Photodiode oder Photodioden ein Spektralband größer als 8 GHz, vorzugsweise 10 GHz und noch stärker bevorzugt 12 GHz haben.

**10.** Verfahren zum Verwenden eines LIDAR-Systems (10), umfassend ein Lasersystem (1), eine optische Beugungskomponente (2) und ein optisches Erkennungssystem (6), das mindestens eine Photodiode (5) umfasst, die so angeordnet ist, dass sie von der von der zu betrachtenden Szene reflektierten Strahlung beleuchtet wird, wobei das Verfahren die folgenden Schritte umfasst:

  a. gleichzeitiges Ausstrahlen einer Strahlung bei mindestens n > 1 separaten Wellenlängen $\lambda_i$, wobei $i \in [1,n]$, durch das Lasersystem;
  b. Beugen durch das Beugungselement der gleichzeitig von der Laserquelle auf die zu betrachtenden Szene ausgestrahlten Strahlung einer Richtung folgend, die bei jeder Wellenlänge unterschiedlich ist, wobei sich die Richtungen in einer gleichen Ebene xz befinden, **dadurch gekennzeichnet, dass** das Verfahren ebenso die folgenden Schritte umfasst:

  c. Beleuchten, mittels eines optischen Systems (7) des optischen Erkennungssystems, der Photodiode oder Photodioden durch eine von der oder einer anderen Laserquelle ausgestrahlte Strahlung, und die eine Wellenlänge $\lambda_0$ aufweist, die von den n Wellenlängen $\lambda_i$ unterschiedlich ist; und
  d. Erzeugen, durch die Photodiode oder Photodioden, eines Signals, das die Schwebungen der Wellenlängen der von der zu betrachtenden Szene reflektierten Strahlung mit der Strahlung mit der Wellenlänge $\lambda_0$ umfasst.

**11.** Bildgebungsverfahren durch ein LIDAR-System nach dem vorhergehenden Anspruch, umfassend einen abschließenden Schritt zum Bestimmen der radialen Geschwindigkeit und der Position von mindestens einem reflektierenden Objekt, das in der zu betrachtenden Szene vorliegt, durch Verarbeitungsmittel (12) des oder der von der oder den Photodioden erzeugten Signale.

**Claims**

**1.** A LIDAR system (10) comprising at least one laser source (1) and an optical detection system (6) for detecting radiation emitted by the laser source and reflected by a scene to be observed, **characterised in that**:

  - the laser source is adapted to emit simultaneously at n > 1 separate wavelengths $\lambda_i$, $i \in [1,n]$;
  - the LIDAR system also comprises a diffractive optical component (2) configured to direct the radiation (4) emitted by the laser source to the scene to be observed in a different direction for each said wavelength simultaneously, said directions being located in one and the same plane xz; and
  - the optical detection system comprises at least one photodiode (5) arranged so as to be illuminated by the radiation reflected by the scene to be observed, **characterised in that** the optical detection system also comprises an optical system (7), which is configured to direct laser radiation (3), emitted by said or another laser source and having a wavelength $\lambda_0$ which is different from said n wavelengths $\lambda_i$, to the one or more photodiodes, such that the one or more photodiodes generate a signal comprising the beats of the wavelengths of the radiation reflected by the scene to be observed with the radiation having the wavelength $\lambda_0$.

2. The LIDAR system according to the preceding claim, wherein the optical detection system comprises a plurality of photodiodes (5) arranged along an axis y not parallel to the plane xz and a converging lens (61) adapted to associate with each of the photodiodes the light rays coming from the scene to be observed and which form, with the y-axis, an angle comprised in a determined range, which is different for each photodiode.

3. The LIDAR system according to any one of the preceding claims, wherein the diffractive optical component is an integrated optical circuit comprising waveguides (20) opening out on output faces of the integrated optical circuit and diverging lenses (21) at the output faces.

4. The LIDAR system according to any one of the preceding claims, wherein the laser system is adapted to emit at the wavelength $\lambda_0$, said LIDAR system comprising an interference filter (11) adapted to select and spatially separate radiation having the wavelength $\lambda_0$ from the laser radiation emitted by the laser system.

5. The LIDAR system according to any one of the preceding claims, comprising an optical component configured to wavelength-shift a spectral component of the laser radiation to obtain $\lambda_0$.

6. The LIDAR system according to any one of the preceding claims, wherein the laser system is a pulse mode-locked laser.

7. The LIDAR system according to any one of claims 1 to 6, wherein the laser system is a continuous wave laser with a fixed phase relationship between the n wavelengths generated by the laser system, further comprising means adapted to perform frequency modulation of the n separate wavelengths, said modulation being less than 1 GHz, preferably less than 100 MHz, preferably less than 10 MHz.

8. The LIDAR system according to any one of the preceding claims, comprising processing means (12) for processing the signal(s) generated by the photodiode(s), adapted to determine at least one parameter among the radial velocity, the distance, and the position of at least one reflecting object present in the scene to be observed.

9. The LIDAR system according to any one of the preceding claims, wherein the photodiode(s) have a spectral bandwidth greater than 8 GHz, preferably 10 GHz, and more preferably 12 GHz.

10. A method for using a LIDAR system (10) comprising a laser system (1), a diffractive optical component (2) and an optical detection system (6) comprising at least one photodiode (5) arranged so as to be illuminated by the radiation reflected by the scene to be observed, said method comprising the following steps:

a. simultaneously emitting radiation at at least n > 1 separate wavelengths $\lambda_i$, with $i\in[1,n]$, by means of the laser system;
b. diffracting, by means of the diffractive element, the radiation emitted by the laser source to the scene to be observed along a different direction for each said wavelength in a simultaneous manner, said directions being located in one and the same plane xz, **characterised in that** said method also comprises the following steps of:

c. illuminating, by means of an optical system (7) of the optical detection system, the photodiode(s) with laser radiation emitted by said or another laser source and having a wavelength $\lambda_0$ different from said n wavelengths $\lambda_i$; and
d. generating, by means of the photodiode(s), a signal comprising the beats of the wavelengths of the radiation reflected by the scene to be observed with the radiation having the wavelength $\lambda_0$.

11. The method for imaging by a LIDAR system according to the preceding claim, comprising a final step of determining the radial velocity and the position of at least one reflecting object present in the scene to be observed by processing means (12) for processing the signal(s) generated by the photodiode(s).

Fig 1

Fig 2A

Fig 2B

Fig 2C

Vue de côté

4

21

*y*

*z*

22

2

4

$\lambda_{12}; d_{12}$

*x*

20

*z*

$\lambda_4; d_4$

$\lambda_3; d_3$

$\lambda_2; d_2$

$\lambda_1; d_1$

Vue de dessus

Fig 3

Fig 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2018052378 A
- DE 102015225863
- US 20170269215 A1
- WO 2017132704 A1
- EP 3232226 A1
- WO 2018116412 A1